(19) **Europäisches Patentamt**
**European Patent Office**
**Office européen des brevets**

(11) **EP 2 905 728 A1**

(12) **EUROPEAN PATENT APPLICATION**

(43) Date of publication:
**12.08.2015 Bulletin 2015/33**

(51) Int Cl.:
*G06Q 10/04* (2012.01)   *G06Q 10/06* (2012.01)

(21) Application number: **14290030.7**

(22) Date of filing: **06.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
• **Acuna Agost, Rodrigo Alejandro**
**06220 Golfe Juan (FR)**

• **Delahaye, Thierry**
**06000 Nice (FR)**
• **Pfeiffer, Thilo**
**06000 Nice (FR)**

(74) Representative: **Samson & Partner Patentanwälte mbB**
**Widenmayerstraße 6**
**80538 München (DE)**

(54) **Vehicle stand allocation**

(57) Methods, computer and program product for assigning at least a first vehicle and a second vehicle to a plurality of stands are provided. The first vehicle and the second vehicle have a scheduled arrival time and a scheduled departure time. A minimum buffer time between a departure of the first vehicle and an arrival of the second vehicle is calculated based on a distribution of a deviation from the scheduled departure time of the first vehicle and/or on a distribution of a deviation from the scheduled arrival time of the second vehicle. The first vehicle and the second vehicle are assigned to different ones of the plurality of stands in response to the time interval between the scheduled departure time of the first vehicle and the scheduled arrival time of the second vehicle being less than the minimum buffer time.

**Fig. 1**

EP 2 905 728 A1

Printed by Jouve, 75001 PARIS (FR)

## Description

## Background

The invention generally relates to a method for assigning scheduled vehicles to stands, and in particular, to computers and computer software for this method.

Assigning vehicles, which arrive and depart on schedule, to a plurality of stands may be planned in advance before an arrival of the vehicles.

One difficulty of planning a stand allocation is to anticipate already during a planning phase future deviations of the vehicles from their schedule during an operational phase. Deviation means that a vehicle may arrive earlier or later than scheduled and/or it may depart earlier or later than scheduled. Therefore, deviations may disturb the (planned) stand allocation in the operational phase. For example, due to a deviation a stand may be still occupied by a vehicle when a further vehicle arrives, which is also assigned to this stand according to the (planned) stand allocation. Such a conflict may require a re-assignment of the vehicles, a re-planning of the stand allocation, an additional shunting of vehicles and/or an intermediate parking of a vehicle during the operational phase, for example. Thus, such a conflict causes additional effort and costs.

A known solution is to add (fixed) buffer times between scheduled departures and scheduled arrivals of successive vehicles being assigned to the same stand. A buffer time provides a time window in which no vehicle is assigned to this stand according to the stand allocation. Thus, the buffer time provides a reserve in time that allows a vehicle to depart later from the stand or to arrive earlier at the stand as scheduled without any conflict (collision hereinafter) with another vehicle requiring or occupying the stand. The longer the buffer times are the fewer collisions appear, because the buffer times in some degree allow preventing or decreasing the probabilities of such collisions. For example, as long as a delay of the departure of a foregoing vehicle and an earliness of the arrival of a subsequent vehicle together do not exceed the buffer time, no conflict arises with regard to the occupancy of the stand, even though both vehicles are assigned to the same stand according to the stand allocation. Nevertheless, other key performance indicators would also be affected. For example, longer buffer times would translate into lower stand utilization and less throughput of vehicles.

Consequently, a significant need continues to exist in the art for an improved manner of planning stand allocations, in particular of finding appropriate buffer times.

## Summary

In an embodiment of the invention, a method of assigning at least a first vehicle and a second vehicle to a plurality of stands is provided. The first vehicle and the second vehicle have a scheduled arrival time and a scheduled departure time. The method includes calculating with a computer system a minimum buffer time between a departure of the first vehicle and an arrival of the second vehicle based on a distribution of a deviation from the scheduled departure time of the first vehicle and/or on a distribution of a deviation from the scheduled arrival time of the second vehicle. The method further includes assigning with the computer system the first vehicle and the second vehicle to different ones of the plurality of stands in response to the time interval between the scheduled departure time of the first vehicle and the scheduled arrival time of the second vehicle being less than the minimum buffer time.

In another embodiment of the invention a computer is provided, that includes at least one processor; and program code configured upon execution by the at least one processor to perform a method of assigning at least a first vehicle and a second vehicle each having a scheduled arrival time and a scheduled departure time to a plurality of stands. The method includes calculating with the computer a minimum buffer time between a departure of the first vehicle and an arrival of the second vehicle based on a distribution of a deviation from the scheduled departure time of the first vehicle and/or on a distribution of a deviation from the scheduled arrival time of the second vehicle. The method further includes assigning with the computer system the first vehicle and the second vehicle to different ones of the plurality of stands in response to the time interval between the scheduled departure time of the first vehicle and the scheduled arrival time of the second vehicle being less than the minimum buffer time.

In another embodiment of the invention a computer program product is provided that includes a computer readable medium and program code stored on the computer readable medium and configured upon execution by at least one processor to perform a method of assigning at least a first vehicle and a second vehicle each having a scheduled arrival time and a scheduled departure time to a plurality of stands. The method includes calculating with the processor a minimum buffer time between a departure of the first vehicle and an arrival of the second vehicle based on a distribution of a deviation from the scheduled departure time of the first vehicle and/or on a distribution of a deviation from the scheduled arrival time of the second vehicle. The method further includes assigning with the computer system the first vehicle and the second vehicle to different ones of the plurality of stands in response to the time interval between the scheduled departure time of the first vehicle and the scheduled arrival time of the second vehicle being less than the minimum buffer time.

**General description**

Before turning to the more detailed description with reference to the figures, a few more general aspects are discussed first.

In some embodiment of the invention a method of planning a stand allocation for a plurality of stands and at least a first and a second vehicle is provided. The first vehicle and the second vehicle have a scheduled arrival time and a scheduled departure time. The method includes calculating with a computer system a minimum buffer time between a departure of the first vehicle and an arrival of the second vehicle based on a distribution of a deviation from the scheduled departure time of the first vehicle and/or on a distribution of a deviation from the scheduled arrival time of the second vehicle. The method further includes assigning with the computer system the first vehicle and the second vehicle to different ones of the plurality of stands in response to the time interval between the scheduled departure time of the first vehicle and the scheduled arrival time of the second vehicle being less than the minimum buffer time.

It is noted that the term "vehicle" does not imply a particular instance of a vehicle such as a particular aircraft of a particular type, model or the like. Rather, it refers to a combination of the vehicle and its scheduled arrival or departure. For example, an particular aircraft (i.e. instance of a vehicle) coming two times to an airport in a day, for example as a morning flight and as an evening flight, is considered as two vehicles.

According to the invention, the first vehicle and the second vehicle are assigned to different stands if the time interval between the scheduled departure time of the first vehicle and the scheduled arrival time of the second vehicle being less than the minimum buffer time. In other words, it is necessary constraint that this time interval exceeds the buffer time for assigning the first and the second vehicle to the same stand. However, this constraint is only necessary but not sufficient for assigning vehicles to the same stand in all cases, because further constraints for assigning one of the vehicles to one of the stands may be considered in some embodiments when planning and/or optimizing the stand allocation as described in further detail below.

The minimum buffer time is based on at least one distribution of a deviation, e.g. the distribution of the deviation of the first vehicle and/or on the distribution of the deviation of the second vehicle from its respective schedule. Therefore, the invention allows variable buffer times that better match the vehicles' typical behaviors with regard to their expected deviations from their schedule. Furthermore, the invention provides a decision basis for deciding whether or not the pair of the first and second vehicles may be assigned to the same stand (and more specific, whether or not they may be assigned to allocate the same stand in a consecutive manner).

Furthermore, the invention increases the robustness of a stand allocation obtained by using this method to assign the vehicles to the stands. A stand may be a parking spot to receive only one vehicle at the most at a time. The robustness may be a measure of the stand allocation being realizable as planned during an operational phase or the stand allocation plan is not realized during the operational phase e.g. because of at least one collision. Collision is to be understood as described above. In other words, a collision occurs when an actual departure time of the first vehicle equals or is later than an actual arrival time of the second vehicle (at the same stand), i.e. both vehicles would require occupying the same stand during an overlapping period of time. The arrival time (in short "arrival") is to be understood as a starting time and the departure time (in short "departure") is to be understood as an ending time of a vehicle occupying a stand.

Increasing the robustness of a stand allocation reduces the probability of conflicts during the operational phase, and, thus, better robustness of the stand allocation plan improves service quality and reduces efforts during the operational phase, i.e. for operating the arriving and departing vehicles at the stands. For example, better robustness of the stand allocation reduces the need for re-planning the stand allocation, re-assignment of vehicles, and/or intermediate parking (during the operational phase).

The term deviation may include an arrival earlier than scheduled, an arrival later than scheduled, a departure earlier than scheduled and/or a departure later than scheduled. In other words, a deviation may be considered as a positive delay or a negative delay of a vehicle with regard to the vehicles' schedule. All such deviations can lead to collisions and, therefore, disrupt stand allocation. For better readability, the following description is formulated with regard to "a vehicle" only. This is to be understood as pertaining to the first vehicle or the second vehicle or the first and second vehicle, if not otherwise explicitly mentioned.

The expression "assigning (a plurality of) vehicles to (a plurality of) stands" is to be understood as follows: A particular one of the vehicles may be assigned to only one of the plurality of the stands (at the most) at any given time. However, two or more (different ones of the) vehicles may be assigned to the same stand (in a consecutive order respecting the buffer time(s)). Accordingly, in some embodiments a plurality of vehicles is assigned to the plurality of stands. In such embodiments, all features described with regard to the first and second vehicle may also apply to other pairs of vehicles of the plurality of vehicles. Furthermore, minimum buffer times may be individually calculated for different pairs of vehicles. Since different vehicles may show different behavior with regard to their expected deviation, such calculated variable buffer times more efficiently increase the robustness of the stand allocation than fixed buffer times (i.e. buffer times not distinguishing between different pairs of vehicles). However, increasing fixed buffer times would also increase robustness, but some added buffer time will be unnecessary and some added buffer time will be insufficient for respective pairs of vehicles.

In some embodiments, the minimum buffer time is based on the quantity of deviations in the past and/or on magnitudes of deviations in the past. Such behavior of the vehicle is reflected by the distribution of the deviation. This allows the minimum buffer time to correspond with the behavior that the vehicle has shown in the past, and, therefore, to increase the robustness of the stand allocation. For example, the minimum buffer time is based on an average value of former deviations of the vehicle. For example, the minimum buffer time may be decreased in response to the vehicle having rarely shown any (relevant) deviations and/or having essentially shown (only) small deviations in the past. The minimum buffer time may be increased in response to the vehicle having frequently shown (relevant) deviations in the past and/or having essentially shown large deviations in the past.

In some embodiments, a history, i.e. historical data of deviations from scheduled departures times of the first vehicle may be analyzed. Alternatively or in addition thereto, a history, i.e. historical data of deviations from scheduled arrival times of the second vehicle may be analyzed. In some embodiments such an analysis may be individually carried out for each vehicle. The analysis may be carried out by using at least a statistical tool. The analysis allows to calculate the distribution of a deviation from the scheduled departure time of the respective vehicles. The history of a vehicle's (former) deviations shows patterns that may be translated into a probability distribution function, which allows for predicting the future behavior of the vehicle. Therefore, the probability distribution function determines the expected deviation of the vehicle during the operational phase. Furthermore, this forecast function may be used to determine in a proper way the minimum buffer time to be used for planning the stand allocation.

In some embodiments, the distribution (of the deviation of the vehicle) may include a single discrete value, multiple discrete values or the distribution may be continuous. In some embodiments, the distribution may be defined as a histogram or by a function, e. g. a continuous function.

In some embodiments, the minimum buffer time is derived from the distribution of a deviation from the scheduled departure time of the first vehicle and the distribution of a deviation from the scheduled arrival time of the second vehicle, i.e. for a particular pair of vehicles, as follows: The minimum buffer time is determined such that a probability of a collision (between the first and the second vehicle) is less than a given level of reliability. This enables to control the probability of collisions in the operational phase by determining a desired value for the level of reliability. Furthermore, the level of reliability provides a measure for the risk of such a collision, if the respective vehicles were assigned to the same stand. Furthermore, the robustness may be determined while planning a stand allocation and/or the robustness of a given stand allocation may be estimated.

In some embodiments, the minimum buffer time may be derived from two contributions associated with the departure of the first vehicle and the arrival of the second vehicle respectively. In some embodiments, two separate buffer times are calculated for a vehicle, namely a first buffer time associated with the arrival of the vehicle and a second buffer time associated with the departure of the vehicle, wherein these buffer times can be derived from the respective distribution of the deviation. Thus, the minimum buffer time between the first and the second vehicle may be calculated as the sum of the second buffer time of the first vehicle and the first buffer time of the second vehicle.

In some embodiments, the minimum buffer time is calculated as follows: Considering the expected deviation of the first vehicle and the expected deviation of the second vehicle, then the probability of a conflict between these vehicles (under the assumption that they are assigned to the same stand) corresponds with the probability that the sum of the deviations exceeds the minimum buffer time. This can be written in short as:

$$\text{probability of a conflict} = P(x + y > b),$$

wherein x is the deviation of the first vehicle, y is the deviation of the second vehicle, b is the minimum buffer time and $P(x+y>b)$ is the probability of a conflict of these vehicles (under the assumption that they are assigned to the same stand). The variables x and y are random variables representing deviations (i.e. x and y represent times), and b can be a fixed buffer time value.

In some embodiments, the variable x pertains to a delay and the variable y pertains to an earliness (i.e. early arrival), wherein x and/or y may have a positive and/or a negative value. In other words, the first vehicle can depart earlier (i.e. x < 0) or later (i.e. x > 0) than scheduled and/or the second vehicle can arrive earlier (i.e. y > 0) or later (i.e. y < 0) than scheduled, for example.

The random variable x and/or the random variable y may have a respective probability distribution function. These probability distribution function(s) may be derived from historical data of the respective vehicles.

Hence, also a sum z = x + y of the random variables x and y is a random variable, which may have a probability distribution function f (based on the probability distribution functions associated with the variables x and y). Then, the probability of a conflict $P(z \geq b)$ can be formulated as:

$$P(z \geq b) = \int_b^\infty f(z)dz$$

As mentioned before, the determination of the minimum buffer time can be a function of the desired level of reliability. This corresponds to the desired probability 1-$\alpha$ to avoid a conflict. In some embodiments, the robustness may be considered as a constraint when planning and/or optimizing the stand allocation, for example by setting a desired value as given level of reliability 1-$\alpha$.

The minimum buffer time may be derived based on the relationship

$$\int_0^b f(z)dz \geq 1 - \alpha,$$

wherein, as mentioned before, 1-$\alpha$ is the given level of reliability, z is the random variable defined as the sum of the variable x representing the deviation from the scheduled departure time of the first vehicle and the variable y representing the deviation from the scheduled arrival time of the second vehicle, and f is the probability distribution function of the random variable z. Therefore, the probability distribution function f is based on the history of deviations from scheduled departures of the first vehicle and the history of deviations from scheduled arrivals of the second vehicle as described before. This relationship can be solved to obtain the minimum buffer time b. In some embodiments, this can be solved by numerical calculus (in particular, no matter the nature of the probability distribution function), for example, using a trapezoidal interpolation algorithm and iterating until the value of the minimum buffer time respect the relationship.

In some embodiments, the probability distribution function can be empirical to take into account any pattern observed on the historic data of a vehicle. For example, the probability distribution function can be represented by discrete values, and, thus:

$$\int_0^b f(z)dz = \sum_{i=0}^b f(i)$$

and, correspondingly, the relationship may be formulated as

$$f(0) + f(1) + \cdots + f(b) \geq 1 - \alpha.$$

The previous two integrals may be considered as a simplification for the case of the sum z = x + y having non-negative values. However, in some embodiments, the integration may be carried out starting from minus infinity in order to include those cases where the probability distribution function f has values unequal 0 for values of z less than 0. In some embodiments, e.g. when calculating the integral by summing up the discrete values f(i), the probability P(z < 0) may be added to f(0) or to an additional summand f(-1) associated with this probability, in cases where the probability distribution function f has values unequal 0 for values of z less than 0.

In some embodiments, the value of the minimum buffer time can be calculated as follows: Simply speaking, the function f is integrated starting from zero (or an appropriate negative value, e.g. minus infinite or -1), i.e. the area below the curve of the function f is summed up, until the desired level of reliability is achieved. This determines the upper boundary of the integral, i.e. the minimum buffer time b. In more detail, for example, initially, a counter variable i may be set to zero and a variable cP representing a cumulated probability, i.e. the integral's actual value, may be set to zero. Then, while the value of the variable cP is less than the level of reliability 1-$\alpha$, the variable cP is increased by f(i), wherein i is the current value of the counter variable i and the counter variable i is increased by one. Then, in response to the value of the variable cP being not any longer less than the level of reliability 1-$\alpha$, the value of the minimum buffer time is determined as the final value of the counter variable i decreased by one.

In some embodiments, a minimum buffer time is calculated with the computer system for at least each pair of consecutively scheduled vehicles. In still other embodiments, a minimum buffer time is calculated with the computer system for at least each pair of vehicles that possibly (with regard to their schedule) might assigned to the same stand.

As mentioned before, the requirement that the time interval between the scheduled departure time of the first vehicle and the scheduled arrival time of the second vehicle is not less than the minimum buffer time for assigning these vehicles to the same stand may be considered as a constraint for planning and/or optimizing the stand allocation. In some embodiments at least one further constraint is considered when assigning a vehicle to a stand. For example, a compatibility constraint may take into account compatibility between the vehicle type and the stand. An adjacency constraint may take into account a situation where a certain assignment of a vehicle to a stand may cause blocking of a neighboring stand, for example, due to the mechanical dimensions of the vehicle or the stand. A further adjacency constraint may take into account that a assignment of a certain (type of) vehicle to a stand may forbid an assignment of another particular (type of) vehicle to a neighboring stand. A further constraint may take into account a compatibility of the goods to be conveyed by the vehicle and the stand's facility to handle these goods. Such constraints may prevent from assigning a given vehicle to a given stand under respective conditions.

In still other embodiments, with the computer system a stand allocation is planned and/or optimized, wherein the minimum buffer time is calculated and the first vehicle and the second vehicle are assigned to stands as described before. In still other embodiments, planning the stand allocation includes optimizing the assignment of the vehicles to the stands with regard to at least one given optimizing objective, while respecting the minimum buffer time between the first vehicle and the second vehicle as a constraint for assigning them to either the same stand or to different stands. For example, an optimizing objective may be minimizing intermediate parking of vehicles, maximizing the utilization of at least one certain stand minimizing the risk of missed connections for passengers or for transferring goods from one vehicle to another vehicle, and/or minimizing $CO_2$ emissions.

In some embodiments, both the first and the second vehicle may be aircraft, trains, ships, buses or trucks, wherein the stands may be parking positions for such vehicles, for example, the plurality of stands may be stands and/or gates of an airport, platforms of a train station, moorages of a harbor, bus stops of a bus station or a parking site for trucks or platforms for loading and unloading trucks.

In other embodiments, the invention applies to assigning flights to stands and/or gates of an airport. Therefore, in another embodiment according to the invention, a method of assigning at least a first flight and a second flight to a plurality of stands and/or gates is provided, wherein the first flight and the second flight have a scheduled arrival time and a scheduled departure time. The method includes calculating with a computer system a minimum buffer time between a departure of the first flight and an arrival of the second flight based on a distribution of a deviation from the scheduled departure time of the first flight and on a distribution of a deviation from the scheduled arrival time of the second flight. Furthermore, the method includes assigning with the computer system the first flight and the second flight to different ones of the plurality of stand and gates respectively in response to the time interval between the scheduled departure time of the first flight and the scheduled arrival time of the second flight being less than the minimum buffer time. In such embodiments, all features described herein with regard to vehicles also apply to flights.

In some embodiments, an apparatus, including at least one processor and program code configured upon execution by the at least one processor to perform any of the aforementioned steps, or a program product comprising a computer readable medium and program code stored on the computer readable medium and configured upon execution by at least one processor to perform the any of the aforementioned steps, may also be provided.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

## Brief Description of the Drawings

FIG. 1 is a flow diagram of a method of assigning a first flight and a second flight to a plurality of stands consistent with the invention.

FIG. 2 is a flow diagram of an example method based on the method illustrated in Fig. 1.

FIG. 3 is a block diagram illustrating a minimum buffer time and deviations of the first flight and the second flight.

FIG. 4 is a schematic plot of a probability distribution function f.

FIG. 5 is a block diagram illustrating an example computer and an example computer program product consistent with the invention.

### Detailed Description

For example, the mechanisms described herein may be applied in the field of airport resources management. One of the most important resources of an airport are stands, i.e. parking spots for aircraft. The stand allocation problem consists in assigning flights, in particular a corresponding aircraft to parking places called "stands", which may also include assigning a gate for arrival of passengers, technical control and preparation of the departure. The following description is (mostly) formulated with regard to flights meaning aircraft providing the service of a particular flight connection. It is noted that the term "vehicle" does not imply a particular instance of a vehicle such as a particular aircraft of a particular type, model or the like. Rather, it refers to any aircraft implementing a particular flight, similar as it includes any bus, train car, or ship implementing a bus connection, a train connection, a shuttle connection or a ferry connection or the like. For example, a particular aircraft coming two times to an airport in a day, for example as a morning flight and as an evening flight is considered as two vehicles. In other words, a vehicle can be understood as a combination of a particular (instance of a) vehicle and its scheduled arrival or departure. Thus, the term "flight" can be understood as an example "vehicle" as described before.

In some examples, an airport gate may have only one stand. Therefore, assigning a flight to a stand corresponds with assigning a flight to a gate. In other examples, at least one gate of an airport may have two or more stands. However, a stand is a parking spot that may be occupied by one aircraft at the most at a time. Stands and gates are scarce resources at an airport. Decisions on where to park an arriving aircraft have a significant impact on costs and quality of service for the different stakeholders, e.g. ground handler, airlines, airport authority, passengers and/or concessionaires.

Stand allocation may be done in two phases: a planning phase and a phase of operations (operational phase). During the planning phase, which may be performed from months to days in advance, the stand planners take the flight schedule as input and allocate each scheduled operation (departure, arrival or parking operations of the aircraft) to a given stand. The result is a stand allocation. The planning of the stand allocation may (optionally) include considering given constraints and objectives as described with regard to further examples below. The operational phase begins with the activation of the stand allocation for operations, for example less than 24 hours before actual operations, i.e. departure or arrival of aircraft. It may happen that the stand allocation is to be modified in order to solve conflicts caused by deviations from the flight schedule that can randomly occur during the operational phase. These modifications have important impacts on several stakeholders and, therefore, the invention allows to reduce them as shown by the following examples. The examples allow to absorb most of the deviations by a minimum buffer time being adapted to distributions of deviations.

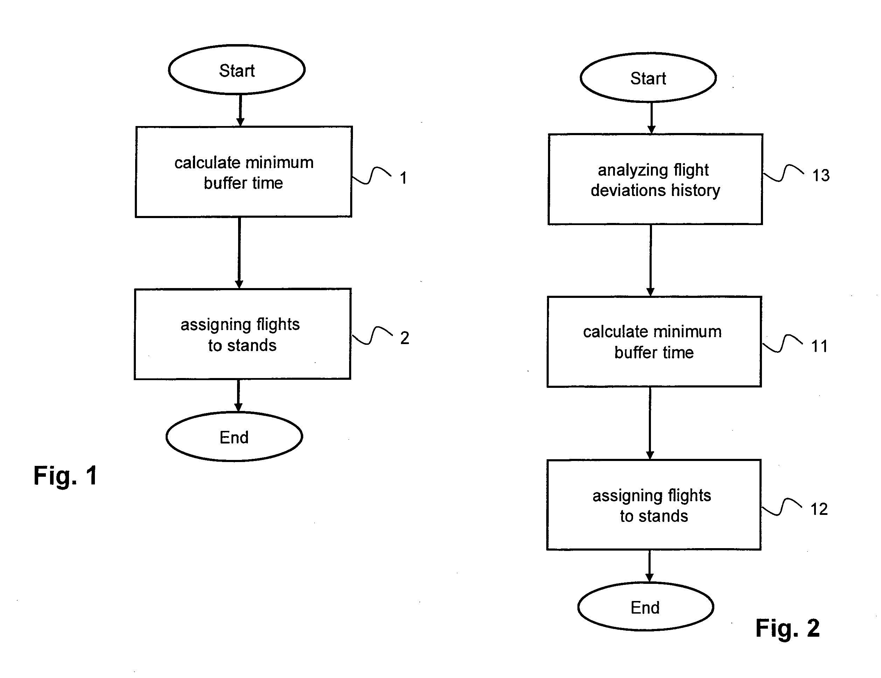

Turning now to the drawings, wherein like numbers denote like parts throughout the several views, FIG. 1 illustrates an example method of assigning at least a first flight and a second flight to a plurality of stands of an airport. The first flight and the second flight have a scheduled arrival time and a scheduled departure time. The minimum buffer time between a departure of the first flight and an arrival of the second flight (at the stands) is calculated 1 with a computer system based on a distribution of a deviation from the scheduled departure time of the first flight and on a distribution of a deviation from the scheduled arrival time of the second flight. Furthermore, the first flight and the second flight are assigned 2 to different ones of the plurality of stands in response to the time interval between the scheduled departure time of the first flight and the scheduled arrival time of the second flight being less than the minimum buffer time. Thereby, the risk of a collision is reduced. In another example method, a stand allocation for an airport is planned, which includes this method of assigning at least the first flight and the second flight to the plurality of stands as described before.

This allows for creating stand allocation plans that are more robust towards schedule deviations occurring during the operational phase, since the minimum buffer time is adapted to the probabilities of deviations to better absorb side effects of deviations, in particular the collisions. Thus, the examples assist in keeping the stand allocation feasible by reducing the probability of (unwanted) changes in the assignment of the flights to the stands. This improves service quality and financial performance. Furthermore, a more efficient allocation of the flights to the stands can be achieved. The methods may be aimed at airport authorities, and the departments dealing with stand and gate allocation.

In other examples a computer includes at least one processor and a program code configured upon execution by the at least one processor to perform the method of assigning with the computer at least the first flight and the second flight to the plurality of stands according to the examples described before. This computer may be part of the computer system. In still other examples a computer program product includes a computer readable medium and a program code stored on the computer readable medium and configured upon execution by at least one processor to perform the method of assigning with the processor at least the first flight and the second flight to the plurality of stands according to the examples described before. The processor may be part of the computer. Further examples distinguish from the examples described before as follows:

In some examples, a plurality of flights is assigned to the plurality of stands. One way to proceed is to calculate (individual) buffer times between every pair of possible consecutive flights. For example, a matrix of all buffer times for every pair of two possible consecutive flights can be calculated. A particular flight may be assigned to one stand at the most. However, multiple flights may be assigned to the same stand in a consecutive order separated by at least respective minimum buffer times. For better readability, the following description is formulated with regard to the first and second flight. However, it is also to be understood with regard to further examples with more than these two flights being assigned to the plurality of stands.

In some examples, before calculating 11 the minimum buffer time and assigning 12 the flights to the stands, the history of flight deviations is analyzed 13 using a statistical tool as illustrated in FIG. 2. The historical data shows patterns on deviations that can be translated on probability distribution functions. These functions can determinate the probability of a given flight deviating from its schedule in the operational phase. This information is used to determine in a proper way the minimum buffer time to be used for the stand allocation. Thus, output of the analysis may be a set of functions permitting to estimate the probability of deviations of the analyzed flights.

For example, the history of deviations from scheduled departures of the first flight and a history of deviations from scheduled arrivals of the second flight are analyzed. Then the distribution of the deviation from the scheduled departure time of the first flight and the distribution of the deviation from the scheduled arrival time of the second flight (for the operational phase) are calculated based on this historic data.

The probability distribution function may also be determined by additionally considering the nature of an airport. Alternatively or in addition thereto, the probability distribution function may be determined by also considering at least one of the following attributes of the flight(s), e.g. airline, flight number, route, time of the day, day of the week and general weather condition.

In some examples the minimum buffer time is determined such that a probability of a collision between the first flight and the second flight is less than a given level of reliability. As mentioned before, collision means that an actual departure time of the first flight equals or is later than an actual arrival time of the second flight. In other words, avoiding a collision means that a flight is not allowed to occupy a stand, when this stand is already occupied by another flight or that a flight has not to leave its current stand for another flight requiring that stand.

Such examples provide a valuable tool to measure robustness of the stand allocation, since the level of reliability corresponds to the probability of collisions occurring in the operational phase. Using the probability distribution functions enables to determine the probabilities of collisions for each pair of consecutive operations at the same stand (i.e. arrival or departure of a flight disrupting the next or previous arrival or departure of another flight at the same stand), and thus to estimate the global robustness of a stand allocation, for example in the planning phase or even of a given stand allocation.

In some examples the minimum buffer time is derived from the given level of reliability. The given level of reliability may be (freely) determined by the planner of the stand allocation to specify a level of an accepted number of collisions. For example, the level of reliability may be (at least) 50%, 60%, 70%, 80%, 90% or 95%.

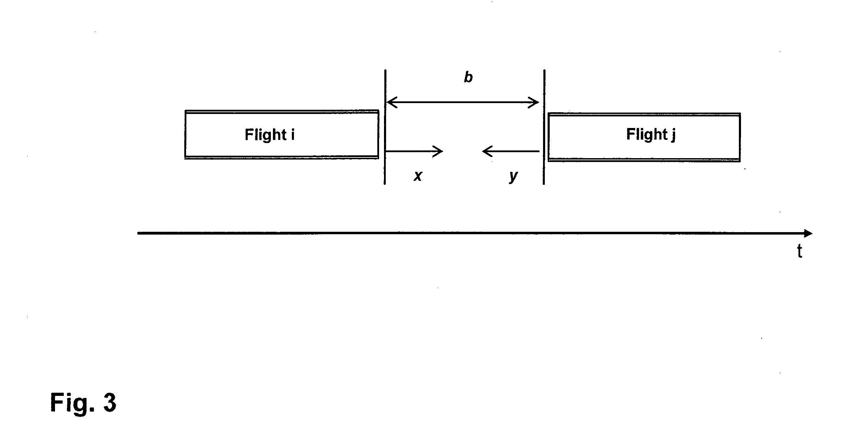

Considering a possible delay x, i.e. a deviation, of the first flight and a possible early arrival y, i.e. a deviation, of the second flight as illustrated in FIG. 3. The deviations x and y are two random variables each having a probability distribution function, for example, the probability distribution functions obtained by the analysis of historical data as described above.

Unwanted changes (of the assignments defined) in the stand allocation would become necessary if a collision between the first flight and the second flight arises. This corresponds with x + y > b. The probability of the occurrence of such a collision P(x+y>b) is $P(z \geq b) = \int_b^\infty f(z)\,dz$, wherein z = x + y; b is the minimum buffer time; and f is a probability distribution function of z, which is associated with the probability distribution functions of x and y.

The probability of this collision can be minimized. For example, it should be less than a value $\alpha$:

$$\int_b^\infty f(z)\,dz \leq \alpha$$

Then, the probability to avoid this collision is 1-$\alpha$, wherein the value 1-$\alpha$ corresponds with the level of reliability, which can be a target value (e.g. a constraint for planning and/or optimizing stand allocation) given by the planner of the stand allocation:

$$\int_0^b f(z)dz \geq 1 - \alpha$$

.

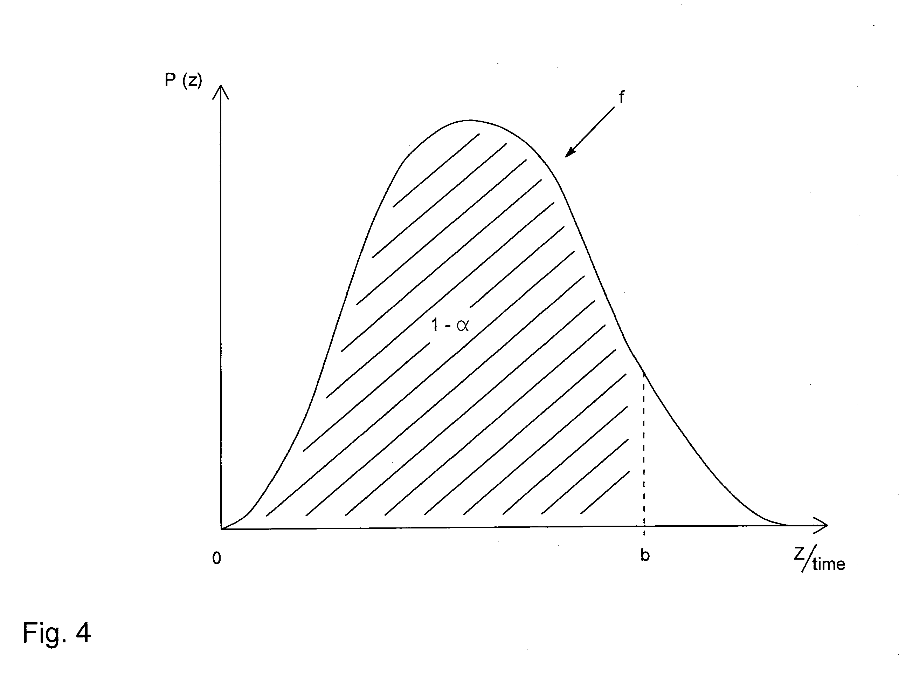

This is schematically illustrated in FIG. 4 showing a plot of the probability distribution function f of the random variable z, i.e. the sum of possible deviations x and y of the first and second flight. The integral of the previous formula corresponds with the area under the plotted curve of the probability distribution function f. The hatched portion of this area starting at z = 0 has the given value of 1-$\alpha$, and, therefore, the upper boundary of the hatched area determines the minimum buffer time b, which promises the given level of reliability 1-$\alpha$. Hence, with a probability of 1-$\alpha$ no collision will occur using the minimum buffer time b. This can be solved to calculate the minimum buffer time b, for example by numerical calculus no matter the nature of the probability distribution function f, e.g. using a trapezoidal interpolation algorithm and iterating until the value of b respects the equation. Planning the stand allocation and, in particular, assigning the flights to stands by taking into account such calculated minimum buffer times will guarantee the given (desired) level of reliability of the stand allocation.

In some examples, the probability distribution function f is empirical and may take into account any pattern observed on the history of data. For example, the probability distribution function f is discrete, and thus:

$$\int_0^b f(z)dz = \sum_{i=0}^b f(i)$$

and

$$f(0) + f(1) + \cdots + f(b) \geq 1 - \alpha$$
.

Then the minimum buffer time b may be calculated by the algorithm

```
function Calculate_MinimumBufferTime()
cP=0
i=0
while (cP < 1 - α)
    cP = cP + f(i)
    i=i+1
return i - 1
function Calculate_MinimumBufferTime()
cP=0
i=0
while (cP < 1 - α)
    cP = cP + f(i)
    i=i+1
return i - 1
```

wherein cP is a cumulated probability and i is a counter variable.

In some examples the buffer time is included as a constraint when assigning the first and the second flight to the plurality of stands. Such a constraint allows to assign the first flight and the second flight to the same stand only in response to the time interval between the scheduled departure time of the first flight and the scheduled arrival time of the second flight not being less than the minimum buffer time.

However, this does not mandatorily mean that the first and second flight are (finally) assigned to the same stand even if this constraint is fulfilled, because of at least one further constraint will prevent from this or the assignment would be less optimal with respect to at least one objective. For example, a (further) constraint to be considered may take into account an incompatibility between vehicle type and stand. Not all stands can accommodate all aircraft types, and some stands may have to be used for either domestic or international traffic only, as they are serviced by gates which belong to domestic or international terminals. Another constraint may be an adjacency constraint, which reflects the fact that the allocation of an aircraft at a given stand might restrict possible allocations at neighboring stands. This can for example occur when the wings of a large aircraft block neighboring stands.

Some examples include selecting at least one objective for optimization. As the buffer time may be considered as a constraint in the optimization, the optimization can look for solutions optimizing for the at least one objective, while respecting the minimum buffer time. This will allow the planner to have more flexibility in designing the stand allocation, and to optimize for relevant airport objectives, while ensuring the obtained stand allocation is robust towards deviations. For example, such an objective may include a maximization of passengers serviced at contact stands; a minimization of towing operations; maximization of service quality of the airport; a minimization of financial costs for the airport and/or the ground handlers; a minimization of modifications of the stand allocation during the operational phase; a maximization of airline preferences; or a minimization of passenger connections at risk.

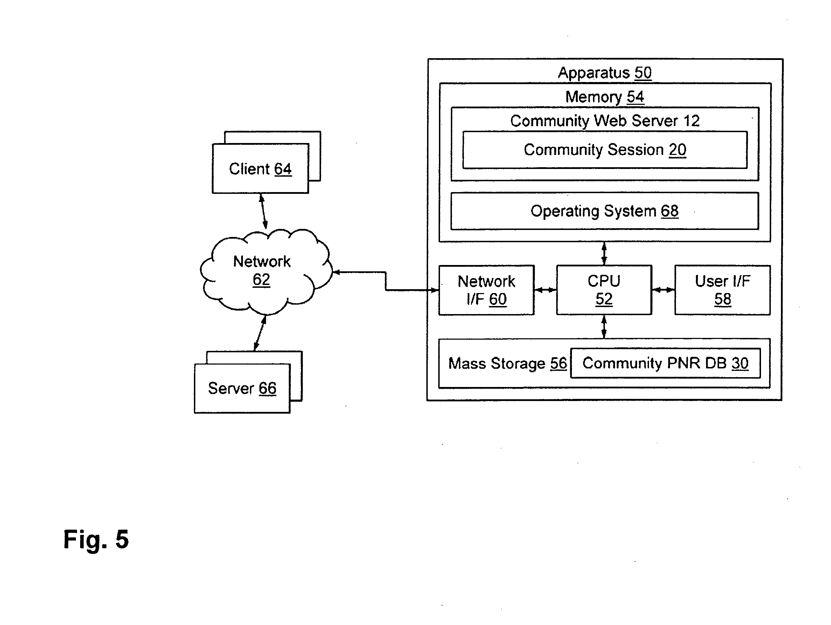

The computer may be implemented in a number of manners consistent with the invention. FIG. 5, for example, illustrates an exemplary apparatus 50 within which various steps from the methods described above may be implemented in a manner consistent with the invention. For the purposes of the invention, computer 50 may represent practically any type of computer, computer system or other programmable electronic device. Moreover, computer 50 may be implemented using one or more networked computers, e.g., in a cluster or other distributed computing system, or may be implemented within a single computer or other programmable electronic device, e.g., a desktop computer, laptop computer, handheld computer, set top box, etc.

Computer 50 typically includes a central processing unit 52 including at least one microprocessor coupled to a memory 54, which may represent a random access memory (RAM) devices comprising a main storage of computer 50, as well as any supplemental levels of memory, e.g., cache memories, non-volatile or backup memories (e.g., programmable or flash memories), read-only memories, etc. In addition, memory 54 may be considered to include memory storage physically located elsewhere in computer 50, e.g., any cache memory in a processor in CPU 52, as well as any storage capacity used as a virtual memory, e.g., as stored on a mass storage device 56 or on another computer coupled to computer 50. Computer 50 also typically receives a number of inputs and outputs for communicating information externally. For interface with a user or operator, computer 50 typically includes a user interface 58 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 50 may also include one or more mass storage devices 56, e.g., a floppy or other removable disk drive, a hard disk drive, a direct access storage device (DASD), an optical drive (e.g., a CD drive, a DVD drive, etc.), and/or a tape drive, among others. Furthermore, computer 50 may include an interface 60 with one or more networks 62 (e.g., a LAN, a WAN, a wireless network, and/or the Internet, among others) to permit the communication of information with other computers and electronic devices, e.g., one or more client computers 64 It should be appreciated that computer 50 typically includes suitable analog and/or digital interfaces between CPU 52 and each of components 54, 56, 58 and 60 as is well known in the art. Other hardware environments are contemplated within the context of the invention.

Computer 50 operates under the control of an operating system 68 and executes or otherwise relies upon various computer software applications, components, programs, objects, modules, data structures, etc.. Moreover, various applications, components, programs, objects, modules, etc. may also execute on one or more processors in another computer coupled to computer 50 via network 62, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by computer 50. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described herein may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the examples illustrated in FIGS. 1 to 5 are not intended to limit the present invention. Indeed, those skilled in the art will recognize that other alternative hardware and/or software environments may be used without departing from the scope of the invention.

In addition, while the examples above have focused on flights and stands of an airport, other examples may pertain to trains and platforms of a train station, buses and bus stops of a bus station, or trucks and parking sites for trucks or platforms for loading and unloading trucks.

It will be appreciated that some of the features of the exemplary embodiments of this invention may be used without the corresponding use of other features. In addition, various additional modifications may be made without departing from the spirit and scope of the invention. Therefore, the invention lies in the claims hereinafter appended.

**Claims**

1.   A method of assigning at least a first vehicle and a second vehicle to a plurality of stands, the first vehicle and the second vehicle having a scheduled arrival time and a scheduled departure time, the method comprising:

   calculating with a computer system a minimum buffer time between a departure of the first vehicle and an arrival of the second vehicle based on a distribution of a deviation from the scheduled departure time of the first vehicle and on a distribution of a deviation from the scheduled arrival time of the second vehicle, and
   assigning with the computer system the first vehicle and the second vehicle to different ones of the plurality of stands in response to the time interval between the scheduled departure time of the first vehicle and the scheduled arrival time of the second vehicle being less than the minimum buffer time.

2.   The method of claim 1, further comprising analyzing, with the computer system, a history of deviations from scheduled departures of the first vehicle and a history of deviations from scheduled arrivals of the second vehicle to calculate the distribution of the deviation from the scheduled departure time of the first vehicle and the distribution of the deviation from the scheduled arrival time of the second vehicle.

3.   The method of claim 1, wherein the minimum buffer time is derived from the distribution of the deviation from the scheduled departure time of the first vehicle and the distribution of the deviation from the scheduled arrival time of the second vehicle by:

   determining the minimum buffer time so that a probability of avoiding a collision of the departure of the first vehicle and the arrival of the second vehicle is at least a given level of reliability,
   wherein the collision corresponds to an actual departure time of the first vehicle equals or is later than an actual arrival time of the second vehicle.

4.   The method of claim 3, wherein the minimum buffer time is derived based on the relationship

$$\int_0^b f(z)dz \geq 1 - \alpha$$,

wherein

b is the minimum buffer time to be derived;

f is a probability distribution function based on a history of deviations from scheduled departures of the first vehicle and a history of deviations from scheduled arrivals of the second vehicle;

z is a random variable corresponding to a total deviation defined by a sum of the deviation from the scheduled departure time of the first vehicle and the deviation from the scheduled arrival time of the second vehicle; and

1-$\alpha$ is the given level of reliability.

5. The method of claim 1, wherein the vehicle is an aircraft and the stands are stands of an airport.

6. The method of claim 5, wherein the probability of a deviation from the scheduled departure time of the first vehicle and the probability of a deviation from the scheduled arrival time of the second vehicle are calculated based on at least one of the group of airline, flight number, route, time of the day, day of the week and general weather conditions.

7. The method of claim 1, including taking into account at least one constraint for assigning the first vehicle and the second vehicle to the plurality of stands, wherein the at least one constraint takes into account at least one of the group of a an incompatibility between vehicle type and stand, and an adjacency constraint.

8. A computer, comprising:

at least one processor; and

program code configured upon execution by the at least one processor to perform a method of assigning at least a first vehicle and a second vehicle each having a scheduled arrival time and a scheduled departure time to a plurality of stands, the method comprising:

calculating with the computer a minimum buffer time between a departure of the first vehicle and an arrival of the second vehicle based on a distribution of a deviation from the scheduled departure time of the first vehicle and on a distribution of a deviation from the scheduled arrival time of the second vehicle, and

assigning with the computer the first vehicle and the second vehicle to different ones of the plurality of stands in response to the time interval between the scheduled departure time of the first vehicle and the scheduled arrival time of the second vehicle being less than the minimum buffer time.

9. The computer of claim 8, further being configured to analyze a history of deviations from scheduled departures of the first vehicle and a history of deviations from scheduled arrivals of the second vehicle to calculate the distribution of the deviation from the scheduled departure time of the first vehicle and the distribution of the deviation from the scheduled arrival time of the second vehicle.

10. The computer of claim 8, further being configured to derive the minimum buffer time from the distribution of the deviation from the scheduled departure time of the first vehicle and the distribution of the deviation from the scheduled arrival time of the second vehicle by:

determining the minimum buffer time so that a probability of avoiding a collision of the departure of the first vehicle and the arrival of the second vehicle is at least a given level of reliability,

wherein the collision corresponds to an actual departure time of the first vehicle equals or is later than an actual arrival time of the second vehicle.

11. The computer of claim 8, further being configured to derive the minimum buffer time based on the relationship

$$\int_0^b f(z)dz \geq 1 - \alpha,$$

wherein

b is the minimum buffer time to be derived;

f is a probability distribution function based on a history of deviations from scheduled departures of the first vehicle and a history of deviations from scheduled arrivals of the second vehicle;

z is a random variable corresponding to a total deviation defined by a sum of the deviation from the scheduled departure time of the first vehicle and the deviation from the scheduled arrival time of the second vehicle; and

1-$\alpha$ is the given level of reliability.

12. The computer of claim 8, wherein the vehicle is an aircraft and the stands are stands of an airport.

13. The computer of claim 12, further being configured to calculate the distribution of the deviation from the scheduled departure time of the first vehicle and the distribution of the deviation from the scheduled arrival time of the second vehicle based on at least one of the group of airline, flight number, route, time of the day, day of the week and general weather conditions.

14. The computer of claim 8, further being configured to take into account at least one constraint for assigning the first vehicle and the second vehicle to the plurality of stands, wherein the at least one constraint takes into account at least one of the group of an incompatibility between vehicle type and stand, and an adjacency constraint.

15. A computer program product, comprising:

a computer readable medium; and

program code stored on the computer readable medium and configured upon execution by at least one processor to perform a method of assigning at least a first vehicle and a second vehicle each having a scheduled arrival time and a scheduled departure time to a plurality of stands, the method comprising:

calculating with the processor a minimum buffer time between a departure of the first vehicle and an arrival of the second vehicle based on a distribution of a deviation from the scheduled departure time of the first vehicle and on a distribution of a deviation from the scheduled arrival time of the second vehicle, and assigning with the processor the first vehicle and the second vehicle to different ones of the plurality of stands in response to the time interval between the scheduled departure time of the first vehicle and the scheduled arrival time of the second vehicle being less than the minimum buffer time.

```
        ┌─────────┐
        │  Start  │
        └─────────┘
             │
             ▼
    ┌──────────────────┐
    │ calculate minimum │ ⟍ 1
    │   buffer time     │
    └──────────────────┘
             │
             ▼
    ┌──────────────────┐
    │ assigning flights │ ⟍ 2
    │    to stands      │
    └──────────────────┘
             │
             ▼
        ┌─────────┐
        │   End   │
        └─────────┘
```

**Fig. 1**

```
        ┌─────────┐
        │  Start  │
        └─────────┘
             │
             ▼
    ┌──────────────────┐
    │  analyzing flight │ ⟍ 13
    │ deviations history│
    └──────────────────┘
             │
             ▼
    ┌──────────────────┐
    │ calculate minimum │ ⟍ 11
    │   buffer time     │
    └──────────────────┘
             │
             ▼
    ┌──────────────────┐
    │ assigning flights │ ⟍ 12
    │    to stands      │
    └──────────────────┘
             │
             ▼
        ┌─────────┐
        │   End   │
        └─────────┘
```

**Fig. 2**

**Fig. 3**

EP 2 905 728 A1

Fig. 4

EP 2 905 728 A1

Apparatus <u>50</u>

Memory <u>54</u>

Community Web Server 12

Community Session <u>20</u>

Operating System <u>68</u>

Client <u>64</u>

Network <u>62</u>

Server <u>66</u>

Network I/F <u>60</u>

CPU <u>52</u>

User I/F <u>58</u>

Mass Storage <u>56</u> | Community PNR DB <u>30</u>

**Fig. 5**

EUROPEAN SEARCH REPORT

Application Number

EP 14 29 0030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods (OJ 11/2007; p592f) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q10/04 G06Q10/06 |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 26 May 2014 | Muela Romero, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 29 0030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |
| | | | **TECHNICAL FIELDS SEARCHED** (IPC) |

The present search report has been drawn up for all claims

| Place of search | Date of completion of the search | Examiner |
|---|---|---|
| The Hague | 26 May 2014 | Muela Romero, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)